# EUROPÄISCHE PATENTSCHRIFT

(11) **EP 1 971 641 B1**
(45) Veröffentlichungstag und Bekanntmachung des Hinweises auf die Patenterteilung: **29.02.2012**
(21) Anmeldenummer: 06818836.6
(22) Anmeldetag: 27.11.2006
(51) Int. Cl.: C08K 5/09, C08L 69/00

(54) **POLYCARBONAT-FORMMASSEN**
POLYCARBONATE MOLDING COMPOSITIONS
MATIERE POUR MOULAGE A BASE DE POLYCARBONATE

(30) Priorität: 09.12.2005 DE 102005058847
(43) Veröffentlichungstag der Anmeldung: 24.09.2008
(73) Patentinhaber: Bayer MaterialScience AG, 51368 Leverkusen (DE)
(72) Erfinder: SEIDEL, Andreas, 41542 Dormagen (DE); WITTMANN, Dieter, 51375 Leverkusen (DE); SCHWEMLER, Christoph, 42799 Leichlingen (DE)
(86) Internationale Anmeldenummer: PCT/EP2006/011337
(87) Internationale Veröffentlichungsnummer: WO 2007/065579

(56) Entgegenhaltungen:
- EP-A2- 0 549 205

## Beschreibung

Die Erfindung betrifft thermoplastische Zusammensetzungen mit verbesserter Verarbeitungsstabilität enthaltend Polycarbonat und kautschukmodifiziertes Pfropfpolymerisat und/oder Vinyl(co)polymerisat, ein Verfahren zu ihrer Herstellung und ihre Verwendung zur Herstellung von Formkörpern.

Thermoplastische Formmassen aus Polycarbonaten und ABS-Polymerisaten (Acrylnitril/Butadien/Styrol) sind seit langem bekannt. So beschreibt die US 3 130 177 A gut verarbeitbare Formmassen aus Polycarbonaten und Pfropfpolymerisaten von Monomermischungen aus Acrylnitril und einem aromatischen Vinylkohlenwasserstoff auf Polybutadien. Diese Formmassen zeichnen sich durch gute Zähigkeit sowohl bei Raumtemperatur als auch bei tiefen Temperaturen, eine gute Schmelzefluidität und eine hoher Wärmeformbeständigkeit aus.

Ein Nachteil derartiger Formmassen ist, dass sie zur Vermeidung schädlicher Auswirkungen auf das Polycarbonat und damit einhergehender herstellungs-, verarbeitungs- bzw. alterungsbedingter Verschlechterungen der anwendungstechnischen Eigenschaften bestimmte Bestandteile, wie beispielsweise basisch wirkende Substanzen und bestimmte anorganische Metallverbindungen, insbesondere oxidische (Übergangs-)Metallverbindungen nicht in nennenswerten Mengen enthalten dürfen, da solche Bestandteile bei hohen Temperaturen, wie sie typischerweise bei der Herstellung und Verarbeitung der Formmassen auftreten, sowie bei längerer Exposition gegenüber feuchtwarmen Klima das Polycarbonat in der Regel katalytisch zersetzen. Ein solcher Polycarbonatabbau äußert sich oft in einer Schädigung der Eigenschaften der Formmassen, insbesondere der mechanischen Kenngrößen wie Duktilität und Zug-Dehnungseigenschaften. Dadurch wird die Auswahl der möglichen Einsatzstoffe für solche Zusammensetzungen sehr stark eingeschränkt. Beispielsweise dürfen nur solche ABS-Polymerisate eingesetzt werden, die frei von basisch wirkenden Verunreinigungen sind. ABS-Polymerisate, die nicht von Anfang an für die Mischung mit Polycarbonaten vorgesehen sind, enthalten aber herstellungsbedingt oft Restmengen basisch wirkender Substanzen, welche als Polymerisationshilfsstoffe z.B. in der Emulsionspolymerisation oder in den Aufarbeitungsprozessen als Hilfsstoffe eingesetzt werden. Zum Teil werden ABS-Polymerisaten auch gezielt basisch wirkende Additive zugesetzt (z.B. Gleit- und Entformungsmittel). Des Weiteren können viele handelsübliche Polymeradditive in schlagzähmodifizierten PC-Zusammensetzungen nicht, oder nur unter erheblichen Einbußen in den Eigenschaften der Zusammensetzungen zum Einsatz kommen, da sie entweder basisch wirken bzw. herstellungsbedingt basisch wirkende Bestandteile/Verunreinigungen enthalten. Beispiele für solche Additive können Entformungsmittel, Antistatika, Stabilisatoren, Lichtschutzmittel, Flammschutzmittel und Farbstoffe sein. Weiterhin führt der Einsatz oxidischer Metallverbindungen beispielsweise in Form von bestimmten Pigmen-(z.B. Titandioxid, Eisenoxid) und/oder Füll- und Verstärkungsstoffen (z.B. Talk, Kaolin, etc.) oft zu erheblichen unerwünschten Einbußen in der Verarbeitungsstabilität der Zusammensetzungen.

Aus der US 4,299,929 sind PC/ABS-Zusammensetzungen (Polycarbonat/Acrylnitril/Butadien/Styrol) bekannt, die dadurch gekennzeichnet sind, dass anorganische Säuren, organische Säuren oder organische Säureanhydride zugesetzt werden. Die resultierenden Formmassen zeichnen sich durch eine verbesserte thermische Stabilität aus.

Aus der EP-A 0576950 sind PC/ABS-Zusammensetzungen mit einer Kombination aus hoher Zähigkeit und guter Oberflächenbeschaffenheit und gleichzeitig guter Wärmeformbeständigkeit und Kugeldruckhärte bekannt, die dadurch gekennzeichnet sind, dass eine mehrere Carboxylgruppen tragende Verbindung mit einem Molekulargwicht von 150 bis 260 g/mol enthalten ist. Die in der EP-A 0576950 offenbarten Zusammensetzungen enthalten bevorzugt 50 bis 100 Gew.-Teile ABS, 1 bis 50 Gew.-Teile Polycarbonat und 0,2 bis 5 Gew.-Teile der mehrere Carboxylgruppen enthaltenden Verbindung.

In EP-A 0683200 sind schlagzähmodifizierte Polycarboant-Zusammensetzungen offenbart, die eine Phosphor-enthaltende Säure und ein Phosphit enthalten.

In EP-A2 0549205 werden thermorlastische Formmassen beschrieben, die A) 100 Gewichtsteile einer Zusammensetzung aus einem Polycarbonat und einem, Copolymer, das entweder ein ABS-Harz oder ein Styrolharz ist, und B)1-30 Gewichtsteile eines von Glycidyl(meth)acrylat abgeleiteten Additionspolymers, und C) 0.001-1 Gewichtsteile einer organischen Säure, einer phosphorigen Säure, einer Phosphorsäure, hypophosphorigen Säure, und/oder einer von einer organischen Säure verschiedenen Verbindung, die ein oder zwei funktionelle Gruppen aufweist ausgewählt aus der Gruppe, die Carboxyl-, Amino-, Hydroxyl-, Säureanhydrid- und Thiolgruppen umfaßt enthalten, und einen geringen Glanz und gute mechanische Eigenschaften aufweisen.

Die der Erfindung zugrunde liegende Aufgabe besteht darin, schlagzähmodifizierte Polycarbonat-Zusammensetzungen zur Herstellung komplexer Formteile bereitzustellen, welche sich durch eine verbesserte Verarbeitungsstabilität sowie eine gute Hydrotysebcständigkcit und einen hellen Rohton auszeichnen.

Es wurde gefunden, dass schlagzähmodifizierte Polycarbonat-Zusammensetzungen, welche Bestandteile enthalten, die das Polycarbonat bei dessen typischen Verarbeitungsbedingungen abbauen, eine deutlich verbesserte Verarbeiturtgsstabilität bei guter Hydrolysebeständigkeit und hellem Rohton (d.h. niedriger Yellowness Index YI) aufweisen, wenn bestimmte Säuren in sehr kleinen Mengen zugesetzt werden. Bevorzugt wird die Säure gemäß Komponente C so ausgewählt, dass diese sich unter den thermischen Bedingungen der Compoundierung unter Freisetzung flüchtiger und/oder neutral reagierender (d.h. es verbleiht als Zersetzungsprodukt der Komponente C weder eine Säure noch eine Base in der Polycarbonat-Zusammensetzung) Verbindungen zersetzt.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 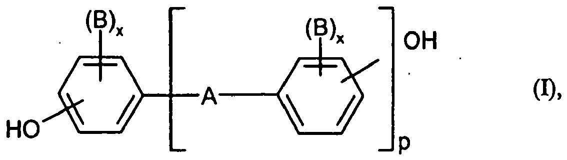 wobei
- A: eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
oder ein Rest der Formel (II) oder (III) 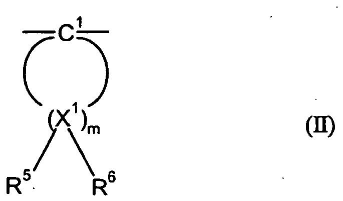 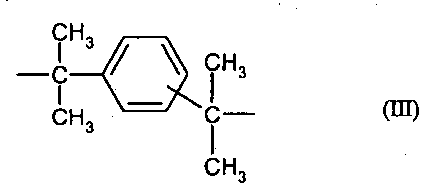
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kembromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di-und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch GPC, Ultrazentrifuge oder Streulichtmessung) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20: 1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität(ηᵣₑₗ) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

### Komponente B

Die Komponente B.1 umfasst ein oder mehrere Pfropfpolymerisate von
- B.1.1: 5 bis 95, vorzugsweise 30 bis 90 Gew.%, wenigstens eines Vinylmonomeren auf
- B.1.2: 95 bis 5, vorzugsweise 70 bis 10 Gew.% einer oder mehrerer Pfropfgrundlagen mit Glasübergangstemperaturen < 10°C, vorzugsweise < 0°C, besonders bevorzugt < -20°C.

Die Pfropfgrundlage B.1.2 hat im allgemeinen eine mittlere Teilchengröße (d₅₀-Wert) von 0,05 bis 10 µm, vorzugsweise 0,1 bis 5 µm, besonders bevorzugt 0,15 bis 1 µm.

### Monomere B.1.1 sind Gemische aus

- B.1.1.1: 50 bis 99 Gew.-Teilen Vinylaromaten und/oder kemsubstituierten Vinylaromaten (wie Styrol, α-Methylstyrol, p-Methylstyrol, p-Chlorstyrol) und/oder Methacrylsäure-(C₁-C₈)-Alkylester, wie Methylmethacrylat, Ethylmethacrylat), und
- B.1.1.2: 1 bis 50 Gew.-Teilen Vinylcyanide (ungesättigte Nitrile wie Acrylnitril und Methacrylnitril) und/oder (Meth)Acrylsäure-(C₁-C₈)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere B.1.1.1 sind ausgewählt aus mindestens einem der Monomere Styrol, α-Methylstyrol und Methylmethacrylat, bevorzugte Monomere B.1.1.2 sind ausgewählt aus mindestens einem der Monomere Acrylnitril, Maleinsäureanhydrid und Methylmethacrylat. Besonders bevorzugte Monomere sind B.1.1.1 Styrol und B.1.1.2 Acrylnitril.

Für die Pfropfpolymerisate B.1 geeignete Pfropfgrundlagen B.1.2 sind Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Silikon/Acrylat-Kompositkautschuke.

Bevorzugte Pfropfgrundlagen B.1.2 sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß B.1.1.1 und B.1.1.2), mit der Maßgabe, dass die Glasübergangstemperatur der Komponente B.2 unterhalb < 10°C, vorzugsweise < 0°C, besonders bevorzugt < -20°C liegt. Besonders bevorzugt ist reiner Polybutadienkautschuk.

Besonders bevorzugte Polymerisate B.1 sind beispielsweise ABS-Polymerisate (Emulsions-, Masse- und Suspensions-ABS), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind. Der Gelanteil der Pfropfgrundlage B.1.2 beträgt mindestens 30 Gew.%, vorzugsweise mindestens 40 Gew.% (in Toluol gemessen).

Die Pfropfcopolymerisate B.1 werden durch radikalische Polymerisation, z.B. durch Emulsions-, Suspensions-, Lösungs- oder Massepolymerisation, vorzugsweise durch Emulsions- oder Massepolymerisation, besonders bevorzugt durch Emulsionspolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B.1 auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß B.1.2 sind vorzugsweise Polymerisate aus Acrylsäurealkylestern, gegebenenfalls mit bis zu 40 Gew.-%, bezogen auf B.1.2 anderen polymerisierbaren, ethylenisch ungesättigten Monomeren. Zu den bevorzugten polymerisierbaren Acrylsäureestern gehören C₁ bis C₈-Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.1.2. Bei cyclischen vernetzenden Monomeren mit mindestens drei ethylenisch ungesättigten Gruppen ist es vorteilhaft, die Menge auf unter 1 Gew.-% der Pfropfgrundlage B.1.2 zu beschränken.

Bevorzugte "andere" polymerisierbare, ethylenisch ungesättigte Monomere, die neben den Acrylsäureestern gegebenenfalls zur Herstellung der Pfropfgrundlage B.1.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropfgrundlagen gemäß B.1.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropfgrundlage B.1.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Die Komponente B kann darüber hinaus auch Homo- und/oder Copolymerisate B.2 von mindestens einem Monomeren aus der Gruppe der Vinylaromaten, Vinylcyanide (ungesättigte Nitrile), (Meth)Acrylsäure-(C₁ bis C₈)-Alkylester, ungesättigte Carbonsäuren sowie Derivate (wie Anhydride und Imide) ungesättigter Carbonsäuren enthalten.

Insbesondere geeignet sind (Co)Polymerisate B.2 aus
- B.2.1: 50 bis 99 Gew.-%, bezogen auf das (Co)Polymerisat B.2, mindestens eines Monomeren ausgewählt aus der Gruppe der Vinylaromaten (wie beispielsweise Styrol, α-Methylstyrol), kemsubstituierten Vinylaromaten (wie beispielsweise p-Methylstyrol, p-Chlorstyrol) und (Meth)Acrylsäure-(C₁-C₈)-Alkylester (wie beispielsweise Methylmethacrylat, n-Butylacrylat, tert.-Butylacrylat) und
- B.2.2: 1 bis 50 Gew.-%, bezogen auf das (Co)Polymerisat B.2, mindestens eines Monomeren ausgewählt aus der Gruppe der Vinylcyanide (wie beispielsweise ungesättigte Nitrile wie Acrylnitril und Methacrylnitril), (Meth)Acrylsäure-(C₁-C₈)-Alkylester (wie beispielsweise Methylmethacrylat, n-Butylacrylat, tert.-Butylacrylat), ungesättigte Carbonsäuren und Derivate ungesättigter Carbonsäuren (beispielsweise Maleinsäureanhydrid und N-Phenyl-Maleinimid).

Diese (Co)Polymerisate B.2 sind harzartig, thermoplastisch und kautschukfrei. Besonders bevorzugt ist das Copolymerisat aus Styrol und Acrylnitril.

Derartige (Co)Polymerisate B.2 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte M_{w} (Gewichtsmittel, ermittelt durch GPC, Lichtstreuung oder Sedimentation) zwischen 15.000 und 250.000.

Als Komponente B kann ein reines Pfropfpolymerisat B.1 bzw. eine Mischung mehrerer Pfropfpolymerisate gemäß B.1, oder eine Mischung aus mindestens einem Pfropfpolymerisat B.1 mit min-destens einem (Co)Polymerisat B.2 zum Einsatz kommen. Kommen Mischungen mehrerer Pfropfpolymerisate oder Mischungen aus mindestens einem Pfropfpolymerisat mit mindestens einem (Co)Polymerisat zum Einsatz, so können diese bei der Herstellung der erfindungsgemäßen Zusammensetzungen separat oder auch in Form eines Präcompounds eingesetzt werden.

Für die erfindungsgemäßen Zusammensetzungen sind insbesondere auch solche Komponenten B geeignet, welche Bestandteile enthalten, die das Polycarbonat bei typischen Verarbeitungsbedingungen abbauen. Insbesondere sind auch solche Komponenten B geeignet, die herstellungsbedingt basisch wirkende Substanzen enthalten. Hierbei kann es sich beispielsweise um Reste von Hilfsstoffen, welche in der Emulsionspolymerisation oder in den entsprechenden Aufarbeitungsprozessen eingesetzt werden, oder um gezielt zugesetzte Polymeradditive wie Gleit- und Entformungsmittel handeln.

### Komponente C

Bevorzugt sind die Säuren gemäß Komponente C ausgewählt aus mindestens einer der Gruppe der aliphatischen Dicarbonsäuren, der aromatischen Dicarbonsäuren und der hydroxyfunktionalisierten Dicarbonsäuren.

Insbesondere bevorzugt sind als Komponente C Zitronensäure, Oxalsäure, Terephthalsäure oder Gemische der genannten Verbindungen.

In einer bevorzugten Ausführungsform wird die Säure gemäß Komponente C so ausgewählt, dass sie sich unter den Bedingungen der Compoundierung unter Freisetzung flüchtiger und/oder neutral reagierender Verbindungen thermisch zersetzt. Somit verbleibt als Zersetzungsprodukt der Komponente C weder eine Säure noch eine Base in der Polycarbonat-Zusammensetzung.

### D) Weitere Komponenten

Die Zusammensetzung enthält als Komponente D weitere Zusätze.

Beispielsweise können der Zusammensetzung weitere polymere Bestandteile wie Polyalkylenterephthalate zugesetzt werden.

Die Polyalkylenterephthalate sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol-und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexandimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestem) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzvisko-sität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

Die Zusammensetzung kann auch weitere übliche Polymeradditive wie Flammschutzmittel (z.B. organische Phosphor- oder Halogenverbindungen, insbesondere Bisphenol-A basierendes Oligophosphat), Antidrippingmittel (beispielsweise Verbindungen der Substanzklassen der fluorierten Polyolefine, der Silikone sowie Aramidfasem), Gleit- und Entformungsmittel, beispielsweise Pentaerythrittetrastearat, Nukleiermittel, Antistatika, Stabilisatoren, Füll- und Verstärkungsstoffe (beispielsweise Glas- oder Karbonfasern, Glimmer, Kaolin, Talk, CaCO₃ und Glasschuppen) sowie Farbstoffe und Pigmente (beispielsweise Titandioxid oder Eisenoxid) enthalten.

Insbesondere kann die Zusammensetzung auch solche Polymeradditive enthalten, die dafür bekannt sind, Polycarbonate unter für derartige Zusammensetzungen typischen Verarbeitungsbedingungen katalytisch zu zersetzten. Zu nennen sind hier insbesondere oxidische Verbindungen von Metallen, insbesondere Metalloxide der 1. - 8. Nebengruppe des Periodensystems, wie beispielsweise Titandioxid, Eisenoxid, Kaolin und Talk, welche in der Regel als Füll- oder Verstärkungsstoffe bzw. als Pigmente zum Einsatz kommen.

### Herstellung der Formmassen und Formkörper

Die erfindungsgeinäßen thermoplastischen Formmassen können beispielsweise hergestellt werden, indem man die jeweiligen Bestandteile in bekannter Weise vermischt und bei Temperaturen von 200°C bis 300°C, bevorzugt bei 230 bis 280°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

In einer bevorzugten Ausführungsform erfolgt die Herstellung der erfindungsgemäßen Zusammensetzungen durch Mischung der Komponenten A bis C und ggf. weiterer Komponenten D bei Temperaturen im Bereich 200 bis 300°C, bevorzugt 230 bis 280°C und einem Druck von maximal 500 mbar, bevorzugt maximal 200 mbar in einem handelsüblichen Compoundieraggregat, bevorzugt in einem Doppelwellenextruder. Die Bedingungen des erfindungsgemäßen Verfahren sind somit so gewählt, dass sich die Säure gemäß Komponente C bei diesem Prozess unter Bildung neutral reagierender und/oder flüchtiger Verbindungen zersetzt und die flüchtigen Zersetzungsprodukte über das angelegte Vakuum zumindest zum Teil aus der Zusammensetzung entfernt werden.

In einer weiteren, speziellen Ausführungsform dieses Verfahrens, wird zunächst die Komponente B mit der Säure der Komponente C und ggf. weiteren Zusätzen gemäß Komponente D bei Temperaturen im Bereich von 180 bis 260°C vorgemischt, und die so hergestellte Mischung in einem zweiten Compoundierungsschritt bei einer Temperatur im Bereich 200 bis 300°C, bevorzugt 230 bis 280°C und einem Druck von maximal 500 mbar, bevorzugt maximal 200 mbar in einem handelsüblichen Compoundieraggregat mit der Komponente A und ggf. weiteren Komponenten D vermischt.

In einer weiterhin bevorzugten Ausführungsform dieses Verfahrens wird die Vormischung der Komponenten B und C sowie ggf. weiteren Zusätzen gemäß Komponente D in Form einer Polymerschmelze in einen Schmelzestrom der Komponente A, welcher eine Temperatur von 220 bis 300°C besitzt, geleitet und nachfolgend die Polymerkomponenten ineinander dispergiert.

Gegenstand der Erfindung ist daher auch ein Verfahren zur Herstellung der erfindungsgemäßen Zusammensetzungen.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich.

Insbesondere können die erfindungsgemäßen Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

### Beispiele

### Komponente A

Lineares Polycarbonat auf Basis Bisphenol-A mit einem gewichtsgemittelten Molekulargewicht M̅_{w} von 27500 g/mol (bestimmt durch GPC).

### Komponente B-1

ABS-Polymerisat hergestellt durch Präcompoundierung von 50 Gew.-% eines im Emulsionspolymerisationsverfahren hergestellten ABS-Pfropfpolymerisats und 50 Gew.-% eines SAN-Copolymerisats. Die Komponente B-1 zeichnet sich durch ein A:B:S-Gewichtsverhältnis von 17:26:57 aus und enthält herstellungsbedingt Broenstedt-basisch wirkende Substanzen, wie aus dem. Pulver-pH der kaltvermahlenen Komponente B-1, gemessen in Anlehnung an ISO 787/9, von 8,4 abgeleitet werden kann.

### Komponente B-2

Physikalische Mischung von 85 Gew.-%, bezogen auf die Komponente B-2, eines durch Präcompoundierung von 50 Gew.-Teilen eines im Emulsionspolymerisationsverfahren hergestellten ABS-Pfropfpolymerisats und 50 Gew.-Teilen eines SAN-Copolymerisats hergestellten ABS-Polymerisats, mit 15 Gew.-%, bezogen auf die Komponente B-2, eines weiteren SAN-Polymerisats. Die Komponente B-2 zeichnet sich durch ein A:B:S-Gewichtsverhältnis von 20:24:56 aus. Der Pulver-pH des in der Komponente B-2 zum Einsatz kommenden ABS-Pfropfpolymerisats beträgt 5,5, woraus geschlossen werden kann, dass das ABS-Pfropfpolymerisat im Wesentlichen frei von herstellungsbedingten basischen Verunreinigungen ist. Die in der Komponente B-2 zum Einsatz kommenden SAN-Copolymerisate enhalten keine basisch wirkenden Bestandteile.

### Komponente C-1

Zitronensäure-Monohydrat (Merck KGaA, Darmstadt, Deutschland)

### Komponente C-2

Oxalsäure (Sigma-Aldrich Chemie GmbH, Steinheim, Deutschland)

### Komponente C-3

Terephthalsäure, >99 % (Fluka, Deutschland)

### Komponente D-1

Irganox B900 (Ciba Specialty Chemicals Inc., Basel, Schweiz)

### Komponente D-2

Pentaeritkittetrastearat

### Komponente D-3

TiO₂: Kronos 2233 (Kronos Titan GmbH, Leverkusen, Deutschland); Pulver-pH gemessen in Anlehnung an ISO 787/9 in einer Mischung aus 50 Gew.-% Wasser und 50 Gew.-% 2-Propanol beträgt 5,8.

### Herstellung und Prüfung der erfindungsgemäßen Formmassen

### Herstellungsverfahren 1:

Die Vermischung aller Komponenten A bis D erfolgt in einem einzigen Compoundierungsschritt in einem Zweischneckenextruder (ZSK-25, Werner u. Pfleiderer, Stuttgart, Deutschland) bei einer Schmelzetemperatur von etwa 260°C und einem Druck von etwa 100 mbar.

### Herstellungsverfahren 2:

Die Vermischung der Komponenten B und C erfolgt in einem ersten Compoundierungsschritt in einem 3-1- Innenkneter bei etwa 220°C unter Normaldruck. Das so hergestellte Präcompound wird mit der Komponente A und der Komponenten D in einem zweiten Compoundierungsschritt in einem Zweischneckenextruder (ZSK-25, Werner u. Pfleiderer, Stuttgart, Deutschland) bei einer Schmelzetemperatur von etwa 260°C und einem Druck von etwa 100 mbar vermischt.

Die Prüfkörper werden auf einer Spritzgießmaschine Typ Arburg 270 E bei 280°C mit einer langen Verweilzeit von 7,5 min hergestellt.

Als Indikator für die Verarbeitungsstabilität der so hergestellten Formmassen dienen verschiedene Messgrößen.

### Methode 1: Änderung des Schmelzfluss R bei Lagerung der Schmelze bei Vearbeitunsgtemperatur

Der MVR der compoundierten Zusammensetzung wird gemäß ISO1133 bei 260°C mit 5kg Stempellast bestimmt. Des Weiteren wird ebenfalls bei 260°C mit 5 kg Stempellast der MVR einer bei erhöhter Temperatur (280°C bzw. 300°C) für eine bestimmte Zeit (7,5 min bzw. 15 min) gelagerten Probe der compoundierten Zusammensetzung bestimmt. Die Differenz dieser beiden MVR-Werte vor und nach der thermischen Belastung dient als Maß für den Abbau des Polycarbonat-Molekulargewichts und damit für die Verarbeitungsstabilität der Formmassen.

### Methode 2: Zäh-Sprödübergangstempetatur im Kerbschlagexperiment

Die Bestimmung der Kerbschlagzähigkeit aₖ erfolgt gemäß ISO 180/1 A bei verschiedenen Temperaturen an Prüfstäben der Dimension 80 mm x 10 mm x 4 mm, welche bei der vergleichsweise hohen Temperatur von 280°C und mit einer vergleichsweise langen Verweilzeit von 7,5 min abgespritzt wurden. Die aₖ-Zäh-Spröd-Übergangstemperatur stellt die Temperatur dar, bei der in diesem Kerbschlagexperiment in etwa der Hälfte aller durchgeführten Experimente ein Zäh- bzw. Sprödbruch beobachtet wird. Sie ist ein Maß für die Verarbeitungsstabilität der Formmasse.

### Methode 3: Eigenfarbe bei verschärften Verarbeitungsbedingungen

Ebenfalls bei 280°C und mit einer Verweilzeit von 7,5 min werden Farbmusterplättchen abgespritzt, deren Gelbwert (YI = Yellowness Index) spektralphotometrisch vermessen wird. Eine helle Eigenfarbe (d.h. niedriger VI) ist ein Indikator für eine gute Verarbeitungsstabilität.

Als Maß für die Hydrolysestabilität der Formmassen dient die Änderung des MVRs gemessen gemäß ISO1133 bei 260°C mit 5kg Stempellast vor und nach einer 7-tägigen Lagerung des Granulats bei 95°C und 100 % relativer Luftfeuchte.

**Tabelle 1:**

| | V1 | 1 | 2 | V2 | 3 | 4 | V3 |
|---|---|---|---|---|---|---|---|
| A(PC) | 58 | 58 | 58 | 58 | 58 | 58 | 58 |
| B-1 (ABS) | 42 | 42 | 42 | 42 | 42 | 42 | 42 |
| C-1 (Zitronensäure) | - | 0,1 | 0,1 | 0,2 | - | - | - |
| C-2 (Oxalsäure) | - | - | - | - | 0,1 | - | - |
| C-3 (Terephthalsäure) | - | - | - | - | - | 0,1 | 0,2 |
| D-1 (Stabilisator) | 0,12 | 0,12 | 0,12 | 0,12 | 0,12 | 0,12 | 0,12 |
| D-2 (Entformungsmittel) | 0,75 | 0,75 | 0,75 | 0,75 | 0,75 | 0,75 | 0,75 |
| (Herstellungsverfahren | 1 | 1 | 2 | 1 | 1 | 1 | 1 |
| OMVR(300°C/l5min) (ml/10min] | 33 | 7 | 2 | 7 | 19 | 11 | 14 |
| aₖ Zäh/Spröd-Übergangstemperatur [°C] | 0 | -30 | -30 | -25 | -30 | -25 | -25 |
| Gelbwert (YI) | 23 | 25 | 30 | 27 | 21 | 28 | 31 |
| ΔMVR (7d/95°C/100% r.h.) [ml/10min] | 11 | 11 | 9 | 13 | 11 | 14 | 13 |

Den Daten der Tabelle 1 ist zu entnehmen, dass sich durch Zugabe kleiner Säuremengen die bedingt durch die basisch wirkenden Substanzen in der ABS-Komponente B schlechte Verarbeitungsstabilität der Polycarbonatzusammensetzungen deutlich verbessern lässt (vergleiche Vergleichsbeispiel 1 mit Beispielen 1, 3 und 4). Zugabe größerer Säuremengen bewirken keine weiteres Verbesserung der Verarbeitungsstabilität, führten aber zu einer Verschlechterung der Eigenfarbe und in einigen Fällen auch der Hydrolysebeständigkeit (vergleiche Beispiel 1 mit Vergleichsbeispiel 2 sowie Beispiel 4 mit Vergleichsbeispiel 3). Die Verwendung solcher Säuren, die sich unter den Herstellbedingungen der Zusammensetzungen thermisch unter Freisetzung flüchtiger und/oder neutraler Verbindungen zersetzen, wie Oxalsäure und Zitronensäure, erweist sich als vorteilhaft im Hinblick auf die Eigenfarbe und insbesondere die Hydrolysebeständigkeit (vergleiche Beispiele 1, 3 und 4). Zitronensäure erweist sich als besonders vorteilhaft im Hinblick auf die Verbesserung der Verarbeitungsstabilität (vergleich Beispiele 1, 3 und 4). Des Weiteren erweist es sich im Hinblick auf die Verarbeitungs- und Hydrolysestabilität als vorteilhaft, zunächst die Komponenten B und C in der Schmelze vorzumischen (vergleiche Beispiele 1 und 2). Ein solches Verfahren erweist sich insbesondere für eingefärbte Materialien als Vorteil, bei denen die Nachteile dieses Verfahrens im Hinblick auf den Rohton der Formmasse nicht zum tragen kommen.

**Tabelle 2:**

| | V4 | 5 | 6 | 7 |
|---|---|---|---|---|
| A (PC) | 58 | 58 | 58 | 58 |
| B-2 (ABS) | 42 | 42 | 42 | 42 |
| C-1 (Zitronensäure) | - | 0,02 | 0,05 | 0,1 |
| D-1 (Stabilisator) | 0,12 - | 0,12 | 0,12 | 0,12 |
| D-2 (Entformungsmittel) | 0,75 | 0,75 | 0,75 | 0,75 |
| D-3 (TiO2) | 5 | 5 | 5 | 5 |
| Herstellungsverfahren | 1 | 1 | 1 | 1 |
| MVR [ml/10min] MVR(280°C/7,5mm) [ml/10min] ΔMVR [ml/10min] | 15 22 7 | 13 20 7 | 13 18 5 | 12 16 4 |
| aₖ Zäh/Spröd-Übergangstemperatur [°C] | +10 | -5 | -15 | -15 |
| ΔMVR (7d/95°C/100% r.h.) [ml/10min] | 16 | 17 | 17 | 17 |

Den Daten in Tabelle 2 ist zu entnehmen, dass auch die Verarbeitungsstabilität von solchen Zusammensetzungen, die keine basischen Verbindungen, jedoch oxidische Metallverbindungen (hier Titandioxid) enthalten, durch Zugabe kleiner Säuremengen deutlich verbessert werden kann. Die Hydrolysestabilität der Formmassen wird dadurch nicht negativ beeinflusst.

## Patentansprüche

1. Thermoplastische Formmassen bestehend aus
A) 10 bis 90 Gew.-Teilen aromatisches Polycarbonat und/oder aromatisches Polyestercarbonat,
B) 10 bis 90 Gew.-Teilen
mindestens einer weiteren Verbindung ausgewählt aus der Gruppe bestehend aus einem kautschukmodifizierten Pfropfpolymerisats (B.1) bestehend aus (B.1.1) 5 bis 95 Gew.% eines Gemisches von Monomeren aus (B.1.1.1) 50 bis 99 Gew.-Teilen Vinylaromaten und/oder kemsubstituierten Vinylaromaten und/oder Methacrylsäure-(C₁-C₈)-Alkylester und (B.1.1.2) 1 bis 50 Gew.-Teilen Vinylcyanide, und/oder (Meth)Acryrlsäure-(C1-C8)-Alkytester und/oder Anhydride und Imide ungesättigter Carbonsäuren,
auf
(B.1.2) 95 bis 5 Gew.% einer oder mehrerer Pfropfgrundlagen ausgewählt aus der Gruppe bestehend aus Dienkautschuken, EP(D)M-Kautschuken EP(D)M-Kautschuken auf Basis Ethylen/Propylen und Dien, Acrylat-, Polyurethan- Silikon-, Chloropren- und Ethylcn/Vinylacetat-Kautschuken-Kautsikon/Acrytat-Kompositkautschuken, Dienkautschuke auf Basis von Butadien und Isopren. Gemische von Dienkautschuken und Copolymerisate von Dienkautschuken,
und
einem Präcompound oder einer Mischung aus (B.1) mit einem kautschukfreiem (Co)Polymerisat (B.2) mindestens eines Monomers ausgewählt aus der Gruppe bestehend aus Vinylaromaten, Styrol, α-Methylstyrol, Vinylcyaniden, (Meth)-Acrylsäure-(C1 bis C8)-Alkylester,_ungesättigten Carbonsäuren sowie Anhydriden und Imiden ungesättigter Carbonsäuren.
C) 0,005 bis 0,15 Gew.-Teilen, bezogen auf 100 Gew.-Teite der Summe der Komponenten A und B, mindestens eine aliphatische und/oder aromatische organische Carbonsäure und
D) mindestens einem Vertreter aus der Gruppe bestehend aus Polyalkylenterephthalat, Flammschutzmittel, Antidrippingmittel, Gleit- und Entformungsmittel, Nukleiermittel, Antistatika, Stabilisatoren, Füll- und Verstärkungsstoffe, Farbstoffe und Pigmente und oxidischen Verbindungen von Metallen,
wobei die Komponente C in die Schmelze enthaltend die Komponenten A und B eingemischt wird oder wobei zunächst in einem ersten Schritt die Komponente B mit der Komponente C vorgemischt wird und dann in einem zweiten Schritt die resultierende Mischung aus B und C mit einer Schmelze enthaltend die Komponente A vermischt wird.

2. Thermoplastische Formmassen gemäß Anspruch 1 enthaltend 0,01 bis 0,15 Gew.-Teile Komponente C.

3. Thermoplastische Formmassen gemäß Anspruch 1 enthaltend 0,015 bis 0,13 Gew.-Teile Komponente C.

4. Thermoplastische Formmassen gemäß einem der vorangehenden Ansprüche enthaltend als Komponente C mindestens eine Säure ausgewählt aus der Gruppe der aliphatischen Dicarbonsäuren, der aromatischen Dicarbonsäuren und der hydroxyfunktionalisicrtcn Dicarbonsäuren.

5. Thermoplastische Formmassen gemäß einem der vorangehenden Anspruche enthaltend als Komponente C Zitronensäure, Oxalsäure oder Terephthalsäure oder eine Mischung daraus.

6. Thermoplastische Formmassen gemäß einem der vorangehenden Ansprüche enthaltend als Komponente C Zitronensäure.

7. Thermoplastische Formmassen gemäß einem der vorangehenden Ansprüche enthaltend 40 bis 80 Gew.-Teile bezogen auf die Summe der Komponenten A und B aromatisches Polycarbonat und/oder Polyestercarbonat.

8. Thermoplastische Formmassen gemäß einem der vorangehenden Ansprüche enthaltend 55 bis 75 Gew.-Teile bezogen auf die Summe der Komponenten A und B aromatisches Polycarbonat und/oder Polyestercarbonat.

9. Thermoplastische Formmassen gemäß einem der vorangehenden Ansprüche enthaltend basisch wirkende Bestandteile.

10. Thermoplastische Formmassen gemäß einem der vorangehenden Ansprüche enthaltend ein kautschukmodifiziertes Pfropfpolymerisat (B.1), hergestellt im Emulsionspolymerisationsverfahren, welches basisch wirkende Bestandteile oder herstellungsbedingte Restmengen basisch wirkender Polymerisations- oder Prozesshilfsstpffe enthält.

11. Thermoplastische Formmassen gemäß einem der vorangehenden Ansprüche enthaltend mindestens eine Komponente ausgewählt aus der Gruppe bestehend aus Polyalkylenterephthalat und oxidischen Verbindungen von Metallen.

12. Thermoplastische Formmassen gemäß einem der vorangehenden Ansprüche enthaltend eine oxidische Metallverbindung.

13. Thermoplastische Formmassen gemäß einem der vorangehenden Ansprüche enthaltend Titandioxid.

14. Verfahren zur Herstellung von Zusammensetzungen gemäß Anspruch 1, **dadurch gekennzeichnet, dass** die Mischung der Komponenten bei Temperaturen im Bereich 200 bis 300°C und einem Druck von maximal 500 mbar in einem handelsüblichen Compoundieraggregat erfolgt.

15. Verfahren nach Anspruch 14, **dadurch gekennzeichnet, daß** sich die zugesetzte Säure C) unter den Verfahrensbedingungen zersetzt und die flüchtigen Zersetzungsprodukte über den angelegten Unterdruck aus der Zusammensetzung entfernt werden.

16. Verfahren zur Herstellung von Zusammensetzungen
enthaltend
A) 10 bis 90 Gew.-Teile aromatisches Polycarbonat und/oder aromatisches Polyestercarbonat.
B) 10 bis 90 Gew.-Teile eines kautschukmodifizierten Pfropfpolymerisats (B.1) oder eines Präcompounds aus kautschukmodifiziertem Pfropfpolymerisat (B.1) mit einem (Co)Polymerisat (B.2), oder einer Mischung aus einem (Co)Polymerisat (B.2) mit mindestens einem Polymer ausgewählt aus der Gruppe der kautschukmodifizierten Pfropfpolymerisate (B.1) und der Präcompounds aus kautschukmodifiziertem Pfropfpolymerisat (B.1) mit einem (Co)Polymerisat (B.2), und
C) 0.005 bis 0.15 Gew.-Teile._bezogen auf 100 Gew.-Teile der Summe der Komponenten A und B. mindestens eine aliphatische und/oder aromatische organische Carbonsäure,
**dadurch gekennzeichnet, dass** zunächst die Komponente B mit der Säure C bei Temperaturen im Bereich von 180 bis 260°C vorgemischt, und dann die so hergestellte Mischung in einem zweiten Compoundienmgsschritt in einem handelsüblichen Compoundieraggregat bei einer Temperatur im Bereich 200 bis 300°C und einem Druck von maximal 500 mhar mit der Komponente A und gegebenenfalls weiteren Komponenten vermischt wird.

17. Verfahren zur Herstellung von Zusammensetzungen gemäß Anspruch ≠ 16, **dadurch gekennzeichnet, dass** zunächst die Komponente B mit der Säure C bei Temperaturen im Bereich von 180 bis 260°C vorgemischt, und diese Vormischung als Polymerschmelze in einen Schmelzestrom der Komponente A, welcher eine temperatur von 220 bis 300°C be-sit7.t geleitet wird und anschließend die Polymerkomponenten ineinander dispergiert werden.

18. Verwendung der thermoplastischen Formmassen gemäß einem der Ansprüche 1 bis 13 zur Herstellung von Formkörpern.

19. Formkörper, enthaltend eine Zusammensetzung nach einem der Ansprüche 1 bis 13.

20. Formkörper nach Anspruch 19 **dadurch gekennzeichnet, dass** der Formkörper ein Teil eines Kraftfahrzeugs, Schienenfahrzeugs, Luftfahrzeugs oder Wasserfahrzeugs oder ein Gehäuse von Kleintransformatoren enthaltenden Elcktrogeräten, ein Gehäuse für Geräte zur Informationsverarbeitung und -Übermittlung, ein Gehäuse oder eine Vermeidung von medizinischen Geräten oder Massagegeräten, ein Gehäuse eines Haushaltgerätes, ein Teil eines Spielfahrzeiigs, ein flächiges Wandetement, ein Gehäuse für Sicherheitseinrichtungen, ein wfinneisoliertes Transportbehältnis, ein Formteil für Sanitär- und Badausrustungen, ein Abdeckgitter für Lüfteröffnungen oder ein Gehäuse Für Gartengeräte ist.

## Claims

1. Thermoplastic moulding compositions composed of
A) from 10 to 90 parts by weight of aromatic polycarbonate and/or aromatic polyester carbonate,
B) from 10 to 90 parts by weight of at least one further compound selected from the group consisting of a rubber-modified graft polymer (B.1) composed of
(B.1.1) from 5 to 95% by weight of a mixture of monomers made of
(B.1.1.1) from 50 to 99 parts by weight of vinylaromatics and/or ring-substituted vinylaromatics and/or C₁-C₈-alkyl methacrylate and
(B.1.1.2) from 1 to 50 parts by weight of vinyl cyanides and/or C1-C8-alkyl (meth)acrylate and/or anhydrides and imides of unsaturated carboxylic acids
on
(B.1.2) from 95 to 5% by weight of one or more graft bases selected from the group consisting of diene rubbers, EP(D)M rubbers, EP(D)M rubbers based on ethylene/propylene and diene, acrylate rubbers, polyurethane rubbers, silicone rubbers, chloroprene rubbers and ethylene/vinyl acetate rubbers, silicone/acrylate composite rubbers, diene rubbers based on butadiene and isoprene, mixtures of diene rubbers and copolymers of diene rubbers,
and
a precompounded material or a mixture made of (B.1) with a rubber-free (co)polymer (B.2) of at least one monomer selected from the group consisting of vinylaromatics, styrene, α-methylstyrene, vinyl cyanides, C1-C8-alkyl (meth)acrylate, unsaturated carboxylic acids and anhydrides and imides of unsaturated carboxylic acids,
C) from 0.005 to 0.15 part by weight, based on 100 parts by weight of the entirety of components A and B, of at least one aliphatic and/or aromatic organic carboxylic acid and
D) at least one representative from the group consisting of polyalkylene terephthalate, flame retardant, antidrip agent, lubricant and mould-release agent, nucleating agent, antistatic agent, stabilizers, fillers and reinforcing materials, dyes and pigments and oxidic compounds of metals,
where component C is incorporated by mixing into the melt comprising components A and B or where component B is first, in a first step, premixed with component C and then, in a second step, the resultant mixture made of B and C is mixed with a melt comprising component A.

2. Thermoplastic moulding compositions according to Claim 1 comprising from 0.01 to 0.15 part by weight of component C.

3. Thermoplastic moulding compositions according to Claim 1 comprising from 0.015 to 0.13 part by weight of component C.

4. Thermoplastic moulding compositions according to any of the preceding claims comprising, as component C, at least one acid selected from the group of the aliphatic dicarboxylic acids, of the aromatic dicarboxylic acids and of the hydroxy-functionalized dicarboxylic acids.

5. Thermoplastic moulding compositions according to any of the preceding claims comprising, as component C, citric acid, oxalic acid or terephthalic acid or a mixture thereof.

6. Thermoplastic moulding compositions according to any of the preceding claims comprising, as component C, citric acid.

7. Thermoplastic moulding compositions according to any of the preceding claims comprising from 40 to 80 parts by weight, based on the entirety of components A and B, of aromatic polycarbonate and/or polyester carbonate.

8. Thermoplastic moulding compositions according to any of the preceding claims comprising from 55 to 75 parts by weight, based on the entirety of components A and B, of aromatic polycarbonate and/or polyester carbonate.

9. Thermoplastic moulding compositions according to any of the preceding claims comprising constituents exerting basic effect.

10. Thermoplastic moulding compositions according to any of the preceding claims comprising a rubber-modified graft polymer (B.1) produced in the emulsion polymerization process and comprising constituents exerting basic effect or residual amounts, resulting from a production process, of polymerization auxiliaries exerting a basic effect or process auxiliaries exerting a basic effect.

11. Thermoplastic moulding compositions according to any of the preceding claims comprising at least one component selected from the group consisting of polyalkylene terephthalate and oxidic compounds of metals.

12. Thermoplastic moulding compositions according to any of the preceding claims comprising an oxidic metal compound.

13. Thermoplastic moulding compositions according to any of the preceding claims comprising titanium dioxide.

14. Process for producing compositions according to Claim 1, **characterized in that** the mixing of the components takes place at temperatures in the range from 200 to 300°C and at a pressure of at most 500 mbar in a commercially available compounding assembly.

15. Process according to Claim 14, **characterized in that** the acid C) added decomposes under the process conditions and the volatile decomposition products are removed from the composition by way of the subatmospheric pressure applied.

16. Process for producing compositions
comprising
A) from 10 to 90 parts by weight of aromatic polycarbonate and/or aromatic polyester carbonate,
B) from 10 to 90 parts by weight of a rubber-modified graft polymer (B.1) or a precompounded material made of rubber-modified graft polymer (B.1) with a (co)polymer (B.2), or a mixture made of a (co)polymer (B.2) with at least one polymer selected from the group of the rubber-modified graft polymers (B.1) and of the precompounded materials made of rubber-modified graft polymer (B.1) with a (co)polymer (B.2), and
C) from 0.005 to 0.15 part by weight, based on 100 parts by weight of the entirety of components A and B, of at least one aliphatic and/or aromatic organic carboxylic acid,
**characterized in that** component B is first premixed with the acid C at temperatures in the range from 180 to 260°C, and then the resultant mixture is mixed in a second compounding step in a commercially available compounding assembly at a temperature in the range from 200 to 300°C and at a pressure of at most 500 mbar with component A and optionally with further components.

17. Process for producing compositions according to Claim 16, **characterized in that** component B is first premixed with the acid C at temperatures in the range from 180 to 260°C, and the said premix is passed in the form of polymer melt into a stream of melt of component A, where the temperature of this stream is from 220 to 300°C, and the polymer components are then dispersed in one another.

18. Use of the thermoplastic moulding compositions according to any of Claims 1 to 13 for producing mouldings.

19. Moulding comprising a composition according to any of Claims 1 to 13.

20. Moulding according to Claim 19, **characterized in that** the moulding is a part of a motor vehicle, rail vehicle, aircraft or watercraft or is a housing of electrical devices comprising small transformers, a housing for devices for the processing and transmission of information, a housing or cladding of medical devices or massage devices, a housing of a domestic device, or a part of a toy vehicle, or is a flat wall element, a housing for safety equipment, a thermally insulated transport container, a moulding for sanitary and bath equipment, a protective grille for ventilation openings or a housing for garden equipment.

## Revendications

1. Masses de moulage thermoplastiques, constituées par
A) 10 à 90 parties en poids de polycarbonate aromatique et/ou de polyestercarbonate aromatique,
B) 10 à 90 parties en poids d'au moins un autre composé choisi dans le groupe constitué par un polymère greffé à base de caoutchouc modifié (B.1) constitué par
(B.1.1) 5 à 95% en poids d'un mélange de monomères de
(B.1.1.1) 50 à 99 parties en poids d'aromatiques de vinyle et/ou d'aromatiques de vinyle à noyau substitué et/ou d'esters (C₁-C₈)-alkyliques de l'acide méthacrylique et
(B.1.1.2) 1 à 50 parties en poids de vinylcyanures et/ou d'esters (C₁-C₈)-alkyliques de l'acide (méth)acrylique et/ou d'anhydrides et d'imides d'acides carboxyliques insaturés,
sur
(B.1.2) 95 à 5% en poids d'une ou de plusieurs bases de greffage choisies dans le groupe constitué par les caoutchoucs de diène, les caoutchoucs d'EP(D)M, les caoutchoucs d'EP(D)M à base d'éthylène/propylène et de diène, les caoutchoucs d'acrylate, de
polyuréthane, de silicone, de chloroprène et d'éthylène/acétate de vinyle, les caoutchoucs composites de silicone/acrylate, les caoutchoucs de diène à base de butadiène et d'isoprène, les mélanges de caoutchoucs de diène et de copolymères de caoutchoucs de diène,
et
un compound préalable ou un mélange de (B.1) avec un (co)polymère exempt de caoutchouc (B.2) d'au moins un monomère choisi dans le groupe constitué par les aromatiques de vinyle, le styrène, l'α-méthylstyrène, les vinylcyanures, les esters (C1-C8)-alkyliques de l'acide (méth)acrylique, les acides carboxyliques insaturés ainsi que les anhydrides et les imides d'acides carboxyliques insaturés,
C) 0,005 à 0,15 partie en poids, par rapport à 100 parties en poids de la somme des composants A et B, d'au moins un acide carboxylique organique, aliphatique et/ou aromatique et
D) au moins un représentant du groupe constitué par le poly(téréphtalate d'alkylène), les agents ignifuges, les agents anti-goutte, les lubrifiants et les agents de démoulage, les agents de nucléation, les antistatiques, les stabilisateurs, les charges et substances de renforcement, les colorants et les pigments et les composés oxydes de métaux,
le composant C étant délayé dans la masse fondue contenant les composants A et B ou, dans une première étape, on mélange au préalable d'abord le composant B et le composant C, puis, dans une deuxième étape, on mélange le mélange obtenu à partir de B et C avec une masse fondue contenant le composant A.

2. Masses de moulage thermoplastiques selon la revendication 1, contenant 0,01 à 0,15 partie en poids de composant C.

3. Masses de moulage thermoplastiques selon la revendication 1, contenant 0,015 à 0,13 partie en poids de composant C.

4. Masses de moulage thermoplastiques selon l'une quelconque des revendications précédentes, contenant comme composant C, au moins un acide choisi dans le groupe des acides dicarboxyliques aliphatiques, des acides dicarboxyliques aromatiques et des acides dicarboxyliques fonctionnalisés par hydroxy.

5. Masses de moulage thermoplastiques selon l'une quelconque des revendications précédentes, contenant, comme composant C, de l'acide citrique, de l'acide oxalique ou de l'acide téréphtalique ou un mélange de ceux-ci.

6. Masses de moulage thermoplastiques selon l'une quelconque des revendications précédentes, contenant, comme composant C, de l'acide citrique.

7. Masses de moulage thermoplastiques selon l'une quelconque des revendications précédentes, contenant 40 à 80 parties en poids, par rapport à la somme des composants A et B, de polycarbonate aromatique et/ou de polyestercarbonate aromatique.

8. Masses de moulage thermoplastiques selon l'une quelconque des revendications précédentes, contenant 55 à 75 parties en poids, par rapport à la somme des composants A et B, de polycarbonate aromatique et/ou de polyestercarbonate aromatique.

9. Masses de moulage thermoplastiques selon l'une quelconque des revendications précédentes, contenant des constituants à effet basique.

10. Masses de moulage thermoplastiques selon l'une quelconque des revendications précédentes, contenant un polymère greffé à base de caoutchouc modifié (B.1), préparé dans un procédé de polymérisation en émulsion, qui contient des constituants à effet basique ou des quantités résiduelles dues à la fabrication d'adjuvants de polymérisation ou de traitement à effet basique.

11. Masses de moulage thermoplastiques selon l'une quelconque des revendications précédentes, contenant au moins un composant choisi dans le groupe constitué par le poly(téréphtalate d'alkylène) et des composants oxydes de métaux.

12. Masses de moulage thermoplastiques selon l'une quelconque des revendications précédentes contenant un composé métallique oxyde.

13. Masses de moulage thermoplastiques selon l'une quelconque des revendications précédentes contenant du dioxyde de titane.

14. Procédé pour la préparation de compositions selon la revendication 1, **caractérisé en ce que** le mélange des composants a lieu à des températures dans la plage de 200 à 300°C et une pression d'au maximum 500 mbars dans un appareil de compoundage usuel du commerce.

15. Procédé selon la revendication 14, **caractérisé en ce que** l'acide ajouté C) se décompose dans les conditions de procédé et les produits de décomposition volatils sont éliminés de la composition via la dépression appliquée.

16. Procédé pour la préparation de compositions, contenant
A) 10 à 90 parties en poids de polycarbonate aromatique et/ou de polyestercarbonate aromatique,
B) 10 à 90 parties en poids d'un polymère greffé à base de caoutchouc modifié (B.1) ou d'un compound préalable de polymère greffé à base de caoutchouc modifié (B.1) avec un (co)polymère (B.2), ou d'un mélange d'un (co)polymère (B.2) avec au moins un polymère choisi dans le groupe des polymères greffés à base de caoutchouc modifié (B.1) et du compound préalable du polymère greffé à base de caoutchouc modifié (B1) avec un (co)polymère (B.2), et
C) 0,005 à 0,15 partie en poids, par rapport à 100 parties en poids de la somme des composants A et B, d'au moins un acide carboxylique organique, aliphatique et/ou aromatique,
**caractérisé en ce qu'**on mélange au préalable d'abord le composant B avec l'acide C à des températures dans la plage de 180 à 260°C, puis on mélange le mélange ainsi préparé dans une deuxième étape de compoundage dans un appareil de compoundage usuel du commerce à une température dans la plage de 200 à 300°C et une pression d'au maximum 500 mbars avec le composant A et le cas échéant d'autres composants.

17. Procédé pour la préparation de compositions selon la revendication 16, **caractérisé en ce qu'**on mélange d'abord au préalable le composant B avec l'acide C à des températures dans la plage de 180 à 260°C, et ce mélange préalable est guidé en tant que masse fondue de polymère dans un flux de masse fondue du composant A, qui présente une température de 220 à 300°C, puis les composants polymères sont dispersés les uns dans les autres.

18. Utilisation des masses de moulage thermoplastiques selon l'une quelconque des revendications 1 à 13 pour la production de corps moulés.

19. Corps moulé contenant une composition selon l'une quelconque des revendications 1 à 13.

20. Corps moulé selon la revendication 19, **caractérisé en ce que** le corps moulé est une partie d'un véhicule automobile, d'un train, d'un avion ou d'un bateau ou un châssis d'appareils électriques contenant de petits transformateurs, un châssis pour appareils destinés au traitement et au transfert d'informations, un châssis ou un habillage d'appareils médicaux ou d'appareils de massage, un châssis d'un appareil domestique, une partie d'un jouet, un élément de paroi plat, un châssis pour dispositifs de sécurité, un récipient de transport thermiquement isolé, une pièce moulée pour des équipements sanitaires ou de bain, une grille de recouvrement pour ouvertures d'aération ou un châssis pour appareils de jardin.
